# EUROPÄISCHE PATENTSCHRIFT

(11) **EP 3 385 129 B1**
(45) Veröffentlichungstag und Bekanntmachung des Hinweises auf die Patenterteilung: **27.02.2019**
(21) Anmeldenummer: 17164916.3
(22) Anmeldetag: 05.04.2017
(51) Int. Cl.: B60R 22/00, A44B 11/25

(54) **VERSCHLIESSVORRICHTUNG**
CLOSING DEVICE
DISPOSITIF DE FERMETURE

(43) Veröffentlichungstag der Anmeldung: 10.10.2018
(73) Patentinhaber: Beutler, Jörg, 83607 Holzkirchen (DE)
(72) Erfinder: Beutler, Jörg, 83607 Holzkirchen (DE)
(74) Vertreter: Lermer, Christoph

(56) Entgegenhaltungen:
- EP-A1- 3 042 807
- DE-A1- 2 065 866
- US-A- 2 153 077
- US-A- 2 902 737
- US-A1- 2002 149 243

## Beschreibung

### TECHNISCHES GEBIET

Die Anmeldung bezieht sich auf eine Vorrichtung zum Verschließen eines Rückhaltesystems, umfassend eine Arretierungseinrichtung mit einem ersten Anschlusselement und einem zweiten Anschlusselement, und eine Sperreinrichtung.

### STAND DER TECHNIK

Es ist eine Vielzahl von Verschlussvorrichtung für Rückhaltesysteme, z.B. in Form von Gurtsystemen, bei Fahrzeugen bekannt. Hierbei werden Gurtschlösser verwendet, bei denen in der Regel Gurthaken in eine entsprechende Aufnahme eingebracht und verriegelt werden. Das Entriegeln erfolgt herkömmlicherweise über einen Knopf zum Öffnen des Gurtschlosses und zur Freigabe und zum anschließenden Herausziehen des Gurthakens aus dem Gurtschloss.

Zum Beispiel das Dokument US 2,153,077 zeigt eine allgemeine Verschlussvorrichtung zum Verschließen eines Sicherheitsgurtes, umfassend eine Arretierungseinrichtung mit einem ersten Anschlusselement und einem zweiten Anschlusselement sowie mit einer Sperreinrichtung.

### AUFGABE DER ERFINDUNG

Aufgabe der Erfindung ist es, eine Vorrichtung bereitzustellen, die eine Anpassung des Rückhaltesystems an den jeweiligen Benutzer des Fahrzeugs ermöglicht und ein sicheres und von äußeren Umständen freies Verschließen eines Rückhalteelements bei vereinfachter Bedienung ermöglicht.

### TECHNISCHE LÖSUNG

Die Aufgabe wird durch eine Verschlussvorrichtung zum Verschließen eines Rückhaltesystems für Personen nach Anspruch 1, ein Verschlussverfahren nach Anspruch 10 sowie ein System nach Anspruch 16 gelöst.

Die Verschlussvorrichtung umfasst dabei eine Arretierungseinrichtung mit einem ersten Anschlusselement und einem zweiten Anschlusselement, und eine Sperreinrichtung, dadurch gekennzeichnet, dass die Arretierungseinrichtung und die Sperreinrichtung derart zusammenwirken, dass die Arretierungseinrichtung in wenigstens einer ersten Position relativ zur Sperreinrichtung und/oder abhängig vom Zustand der Sperreinrichtung eine gegen eine vorgegebene minimale Gegenkraft und/oder durch eine Bewegung des ersten Anschlusselements relativ zum zweiten Anschlusselement lösbare Verbindung zwischen dem ersten Anschlusselement und dem zweiten Anschlusselement herstellt, und in wenigstens einer zweiten Position relativ zur Sperreinrichtung und/oder abhängig vom Zustand der Sperreinrichtung eine unlösbare Verbindung zwischen dem ersten Anschlusselement und dem zweiten Anschlusselement herstellt.

Das erste und das zweite Anschlusselement können verschiedene und an den jeweiligen Zweck angepasste Formen, wie z.B. Haken, Klinke, Einbuchtung, Einkerbung, Nut, etc. aufweisen und sind in vorteilhafterweise Weise komplementär zueinander ausgebildet, so dass mit Verbindung des ersten Anschlusselements zum zweiten Anschlusselement (oder umgekehrt) in der ersten Position eine lösbare Verbindung infolge eines Formschlusses hergestellt wird. Diese Verbindung kann in der ersten Position durch Aufbringen einer bestimmten (Zug-) Kraft und/ oder durch eine Bewegung gelöst werden.

Um die Lösbarkeit der Verbindung in der ersten Position und ein eventuelles und ggf. unbeabsichtigtes Herausziehen während einer Fahrt zu verhindern, wird die Arretierungsvorrichtung, bzw. die Verbindung des ersten Anschlusselement und des zweiten Anschlusselements in einer zweiten Position durch das Sperrelement, und ggf. abhängig von dessen Zustand, arretiert bzw. blockiert.

In vorteilhafter Weise wird die unlösbare Verbindung in der zweiten Position durch eine Bewegung der Sperreinrichtung relativ zur Arretierungseinrichtung hergestellt.

Folglich wird entweder die Arretierungseinrichtung zur unbewegten Sperreinrichtung oder die Sperreinrichtung zur starren Arretierungseinrichtung aktiv bewegt. Denkbar ist auch eine Bewegung beider Elemente zueinander.

Beispielsweise wird die Arretierungseinrichtung nach Herstellung der Verbindung in der ersten Position nach dem Verbinden des ersten Anschlusselements mit dem zweiten Anschlusselement in die Sperreinrichtung geschoben.

Ein Lösen der Verbindung des ersten Anschlusselement und des zweiten Anschlusselements wird durch die Sperreinrichtung unterbunden und blockiert.

Daneben kann die unlösbare Verbindung in der zweiten Position durch elektrische und/ oder magnetische und/ oder mechanische Überführung der Sperreinrichtung von der ersten zur zweiten Position hergestellt werden.

So können ein oder beide Anschlusselemente der Arretierungseinrichtung nach Herstellung der Verbindung in der ersten Position durch einen Teil der Sperreinrichtung in Form eines Bolzens blockiert werden und somit die zweite Position hergestellt werden. Die Sperreinrichtung bleibt hierbei stationär und nur der Bolzen als Teil der Sperrvorrichtung bewegt sich.

Die zweite Position kann auch infolge eines elektromagnetischen Verschlusses herbeigeführt werden, wodurch ein oder beide Anschlusselemente elektromagnetisch blockiert werden.

Andere Varianten der Arretierung des ersten Anschlusselement und/oder des zweiten Anschlusselements in elektrischer, magnetischer oder mechanischer Weise, allein oder in Kombination, sind ebenfalls denkbar.

Bevorzugt ist die Gegenkraft zum Lösen des ersten Anschlusselements vom zweiten Anschlusselement in der ersten Position einstellbar.

Durch die Gestaltung der komplementären Geometrie der Verbindungsbereiche der beiden Anschlusselemente zueinander kann die Kraft bestimmt werden, die zum Eingehen und zum anschließenden Lösen der Verbindung in der ersten Position mindestens erforderlich ist.

In einer besonders vorteilhaften Ausführung der Erfindung umfasst die Vorrichtung ein Positionierelement, das am zweiten Anschlusselement angeordnet ist und geeignet ist, das zweite Anschlusselement in einer vorgegebenen Position zu halten.

Dabei kann das zweite Anschlusselement in einer Position gehalten werden, um eine Kraft zum ersten Anschlusselement hin aufzubringen. Diese unterstützt die Verbindung der ersten Position der beiden Anschlusselemente zueinander und unterbindet ein versehentliches und unbeabsichtigtes Lösen der Verbindung.

Das Positionierelement ist hierbei insbesondere ein elastisches Element, wie eine Feder, und/oder besteht aus einem elastischen Material und/ oder die Positionierung des zweiten Anschlusselements erfolgt insbesondere elektrisch und/oder magnetisch und/oder mechanisch.

Die Gegenkraft zum Lösen des ersten Anschlusselements vom zweiten Anschlusselement in der ersten Position wird durch das Positionierelement aufgebracht bzw. bestimmt.

Die Kraft zur Herstellung eines Kontakts zwischen den Verbindungsbereichen der beiden Anschlusselemente kann alleine vom Positionierelement aufgebracht werden. Im Falle des Vorliegens eines Positionierelements in Form einer Feder bestimmt somit alleine die Federkraft, bzw. zum großen Teil, die Kraft die auf die Verbindung zwischen ersten und zweitem Anschlusselement aufgebracht wird und somit auch die Gegenkraft, die erforderlich ist, um diese Verbindung zu lösen. Die Federkraft am zweiten Anschlusselement ist so stark bemessen, dass ein möglichst einfaches Herausziehen des ersten Anschlusselements ermöglicht ist. Gleichzeitig wird unterbunden, dass sich das verbundene erste Anschlusselement beim Einbringen der Arretierungseinrichtung in die Sperreinrichtung nicht aufgrund der am ersten Anschlusselement (z.B. über einen verbundenen Gurt) anliegenden Kraft vom zweiten Anschlusselement löst.

Bevorzugt weist die Sperreinrichtung eine hülsenförmige Form, insbesondere eine Gehäuseform auf, die die Arretierungseinrichtung wenigstens teilweise umschließt.

Denkbar ist eine Vielzahl von Gehäuseformen. Die Sperrvorrichtung kann eine Aufnahme zum Einführen der Arretierungseinrichtung aufweisen. Maßgeblich ist, dass durch die relative Bewegung der Arretierungseinrichtung zur Sperreinrichtung infolge der Gehäuseform ein Lösen der Verbindung von ersten und zweiten Anschlusselement unterbunden, bzw. blockiert wird.

In vorteilhafter Weise weist die Arretierungseinrichtung der Verschlussvorrichtung einen Sensor auf, der geeignet ist, den Zustand der Arretierungseinrichtung zu überwachen.

Der integrierte Sensor registriert beispielsweise, ob das erste Anschlusselement, z.B. in Form eines Gurthakens, mit dem zweiten Anschlusselement verbunden bzw. in das Gurtschloss eingesteckt ist, wodurch eine sichere Überwachung der Verbindung der beiden Anschlusselemente und somit des Anschnallens erfolgen kann.

Außerdem hat die Erfindung ein Verfahren zum Verschließen eines Rückhaltesystems für Personen bei einer oben beschriebenen Vorrichtung zum Gegenstand:
1. Verbinden eines ersten Anschlusselements mit einem zweiten Anschlusselement
2. Arretierung und Sicherung des zweiten Aufnahmeelements durch eine Sperreinrichtung,
wobei die Schritte 1. und 2. zeitlich zueinander versetzt ausgeführt werden.

Im ersten Schritt wird in einer ersten Position der beiden Anschlusselemente relativ zur Sperreinrichtung und ggf. abhängig vom Zustand der Sperreinrichtung eine lösbare Verbindung zwischen den Anschlusselementen hergestellt. Hierbei sind noch bei Bedarf Korrekturen möglich und es kann beispielsweise die Verbindung zu einem erforderlichen Wechsel der Sitzposition gelöst werden. Im zweiten Schritt erfolgt die Fixierung/Verriegelung des zweiten Anschlusselements am ersten Anschlusselement, insbesondere indem die verbundenen Anschlusselemente in die Sperreinrichtung eingebracht werden, also relativ zur Sperreinrichtung in eine zweite Position gebracht werden. Andere Möglichkeiten der Fixierung/ Arretierung, insbesondere ohne eine Bewegung der Anschlusselemente relativ zum Sperrelement, bzw. nur durch den Zustand des Sperrelements sind daneben ebenfalls möglich. Denkbar ist somit jede Arretierung der Verbindung zwischen den beiden Anschlusselementen.

Damit erfolgt der Verriegelungsvorgang zeitlich getrennt von der Verbindung des ersten Anschlusselements mit dem zweiten Anschlusselement.

In vorteilhafter Weise erfolgt die Verbindung des Verfahrensschritts 1 durch Formschluss, Verhaken, Verhängen, Verrasten und/oder Ineingriffnahme.

Wie bereits oben beschrieben ist jede Art der lösbaren Verbindung und Ineingriffnahme zwischen dem ersten Anschlusselement und dem zweiten Anschlusselement denkbar, um die Verbindung der ersten Position herzustellen.

Die hergestellte Verbindung zwischen dem ersten Anschlusselement und dem zweiten Anschlusselement des 1. Verfahrensschritts ist durch Aufbringen einer vorgegebenen minimalen Kraft lösbar.

Um die Anschlusselemente in der ersten Position voneinander zu lösen, z.B. um die Sitzposition oder die Gurtlage ändern zu können, ist eine definierte Kraft aufzuwenden. Dadurch wird erreicht, dass bei Kräften, die unter der definierten Kraft liegen, ein versehentliches Lösen der Verbindung unterdrückt wird.

Die hergestellte Verbindung zwischen dem ersten Anschlusselement und dem zweiten Anschlusselement wird im 2. Verfahrensschritt unlösbar fixiert.

Durch die unlösbare Fixierung, bzw. Arretierung ist sowohl ein beabsichtigtes, als auch ein unbeabsichtigtes Öffnen des Rückhaltesystems für den Passagier unmöglich, was gerade bei Fahrzeugen mit extremen Bewegungen, wie z.B. Fahrzeugen von Vergnügungseinrichtungen, wie Achterbahnen, unumgänglich ist.

Daneben offenbart die vorliegende Erfindung auch ein Verfahren zum Lösen eines vorgenannten verschlossenen Rückhaltesystems bei einer vorgenannten Vorrichtung:
1. Entsicherung eines zweiten Anschlusselements aus einer Sperreinrichtung,
2. Lösen einer Verbindung eines ersten Anschlusselements mit dem zweiten Anschlusselement durch Aufbringen wenigstens einer vorgegeben minimalen Kraft und/oder durch Bewegung des ersten Anschlusselements und/oder des zweiten Anschlusselements und/oder der beiden Anschlusselemente relativ zueinander,
wobei die Schritte 1. und 2. zeitlich zueinander versetzt ausgeführt werden.

Entsprechend den Verfahrensschritten zum Verschließen läuft das Lösen in umgekehrter Reihenfolge ab. Zuerst erfolgt das Entriegeln der Arretierungseinrichtung. Im Anschluss wird das erste Anschlusselement vom zweiten Anschlusselement infolge Kraftaufwendung und/oder Bewegung gelöst. Der zweite Schritt ist hierbei erforderlich um beim Aussteigen zu verhindern, dass beim Entriegeln aufgrund der Zugsspannung am Gurt der Gurt unkontrolliert aus dem Gurtschloss herausgeschleudert wird.

In vorteilhafter Weise erfolgt das Lösen der Verbindung des Verfahrensschritts 1 durch Aushaken, Aushängen, Entrasten, Trennung einer Ineingriffnahme.

Die Erfindung hat außerdem ein Sicherheitssystem zum Einsatz in einem Fahrzeug, insbesondere in einem Vergnügungsfahrzeug, zum Gegenstand, das einen Sitz, ein Rückhaltesystem mit wenigstens einer Rückhaltevorrichtung und eine wie oben beschriebene Verschlussvorrichtung umfasst.

Hierbei kann ein Sitz jede Einrichtung umfassen, die geeignet ist, einen Passagier aufzunehmen. Unter einem Rückhaltesystem sind neben der Rückhaltevorrichtung noch die erforderlichen Schlösser, Aufnahmen, Rückstell- und Spanneinrichtungen zu verstehen.

In einer weiteren Ausführung der Erfindung ist die Rückhaltevorrichtung ein Gurt, eine Ratsche, eine Festhaltekette oder ein Festhalteseil.

Denkbar ist somit das Verschließen einer Vielzahl von denkbaren Rückhaltevorrichtungen mittels des erfindungsgemäßen Verschlusssystems.

### KURZE BESCHREIBUNG DER FIGUREN

- Figur 1: Seitliche Darstellung eines Verriegelungsmechanismus in einer Ausführungsform der Erfindung mit einer Arretierungseinrichtung bestehend aus einem ersten und einem zweiten Anschlusselement und einer Sperrvorrichtung;
- Figur 2: Seitliche Darstellung eines Verriegelungsmechanismus in einer Ausführungsform der Erfindung im verriegelten Zustand, bei dem die Sperreinrichtung das zweite Anschlusselement arretiert;
- Figur 3 A: Perspektivische Darstellung eines Verriegelungsmechanismus in einer ersten nicht zur Erfindung gehörenden Variante, wobei das erste Anschlusselement in Form einer Gurtlasche mit Verbindungselement im gelösten Zustand vom zweiten Anschlusselement ist; das zweite Anschlusselement weist ein Aufnahme- und Arretierungselement für das Verbindungselement der Gurtlasche auf;
- Figur 3B: Perspektivische Darstellung eines Verriegelungsmechanismus, bei dem die Gurtlasche mit dem zweiten Anschlusselement in einer ersten Position ist. Das Verbindungselement und das Aufnahmeelement sind im Eingriff;
- Figur 3C: Rückansicht der perspektivischen Darstellung der Figur 3B, bei der die Gurtlasche im Eingriff mit dem zweiten Anschlusselement in der ersten Position steht; Verbindungselement und Aufnahmeelement sind im Eingriff;
- Figur 4A: Perspektivische Darstellung eines Verriegelungsmechanismus mit Arretierungseinrichtung und Sperreinrichtung, wobei sich die Arretierungseinrichtung in der ersten Position gemäß den Figuren 3B und 3C befindet;
- Figur 4B: Perspektivische Darstellung eines Verriegelungsmechanismus, bei dem die Arretierungseinrichtung in das Gehäuse der Sperreinrichtung gezogen wird;
- Figur 4C: Perspektivische Darstellung eines Verriegelungsmechanismus in einer zweiten Position, bei der sich die Arretierungseinrichtung im Gehäuse der Sperreinrichtung befindet; die Verbindung zwischen erstem und zweitem Anschlusselement ist arretiert;
- Figur 5A: Vorderansicht einer weiteren nicht zur Erfindung gehörenden Variante der Verschlussvorrichtung, bei der eine hakenförmige Gurtlasche von der Seite in das zweite Aufnahmeelement eingehängt wird und somit die Verbindung der ersten Position herstellt;
- Figur 5B: Detailansicht der Verbindung von Gurtlasche und zweitem Aufnahmeelement gemäß Fig. 5A

### BESCHREIBUNG BEVORZUGTER BEISPIELE

Die Erfindung wird nachfolgend anhand von nicht abschließenden Ausführungsbeispielen beschrieben.

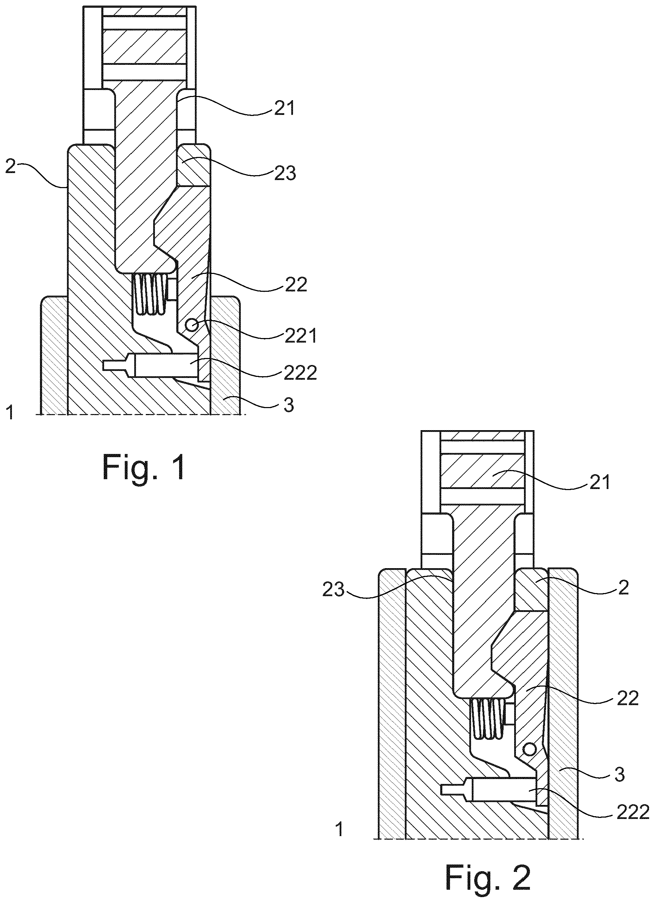

Die Figuren 1 und 2 zeigen seitliche Schnittansichten einer Ausführungsform der Erfindung mit einer Arretierungseinrichtung 2 in Form eines Gurtschlosses in einer entriegelten ersten Position (Fig. 1) und in einer verriegelten zweiten Position (Fig. 2). Die Verschlussvorrichtung 1 weist dabei eine Arretierungseinrichtung 2 auf, bestehend aus einem ersten Anschlusselement 21 und einem zweiten Anschlusselement 22. Ferner weist die Arretierungseinrichtung 2 eine Aufnahme 23 für das erste Anschlusselement 21 auf. Die Verschlussvorrichtung 1 weist weiter eine Sperreinrichtung 3 auf.

Das erste Anschlusselement 21 ist im vorliegenden Ausführungsbeispiel in Form eines Gurthakens ausgebildet, an dem ein Gurt zum Rückhalt des Passagiers befestigt wird (nicht dargestellt). Das zweite Anschlusselement 22 weist die Form eines Verriegelungshakens auf, der komplementär zum Gurthaken ausgebildet ist, um ein gegenseitiges Verhaken zu ermöglichen. Der Verriegelungshaken 22 ist drehbar um eine Drehachse 221 angeordnet. Die Drehbewegung wird durch die Sperreinrichtung 3 auf einer Seite eingeschränkt, sobald die Arretierungseinrichtung wenigstens teilweise in der Sperreinrichtung 3 aufgenommen ist. Ferner ist ein Positionierelement 222 in Form einer Feder an der dem Verriegelungshaken gegenüberliegenden Seite angeordnet. Das Positionierelement 222 übt eine Kraft auf das zweite Anschlusselement 22 aus, wodurch das zweite Anschlusselement 22 zum ersten Anschlusselement 21 bewegt wird, bzw. eine Kraft zum ersten Anschlusselement 22 hin aufgebracht wird.

Aus Fig. 1 wird die erste Position ersichtlich, in der der Gurthaken 21 in die Aufnahme 23 eingebracht ist und im Eingriff mit dem Verriegelungshaken 22 steht. Infolge der von dem Positionierelement 222 in Form einer Feder aufgebrachten Gegenkraft bildet beim Einstecken der Gurthakens 21 mit dem Verriegelungshaken 21 einen Formschluss. Zum Ausschnallen des ersten Aufnahmeelements 21 in Form des Gurthakens kann in dieser Stellung durch Aufbringen einer bestimmten Zugkraft (die durch die Kraft der Feder am Verriegelungshaken und durch die Geometrie der formschlüssigen Verbindung bestimmt wird und insofern einstellbar ist) der Verriegelungshaken 22 beiseitegeschoben werden, so dass der Gurthaken 21 herausgezogen werden kann. Dazu sind im Bereich der Verrastung bzw. im Bereich der Anlageflächen des Gurthakens 21 und des Verriegelungshakens 22 schräge Kontaktflächen vorgesehen, die die am Gurthaken ausgeübte Zugkraft teilweise in eine Querkraft umwandeln, die auf den Verriegelungshaken 22 gegen die Kraft des Positionierelements 222 eine nach außen gerichtete Kraft ausübt.

So kann zum Lösen der Verbindung zwischen ersten und zweiten Anschlusselement durch Aufbringen einer bestimmten (Zug-) Kraft der Verriegelungshaken 22 beiseitegeschoben werden, so dass der Gurthaken 21 herausgezogen werden kann.

Um vor allem ein versehentliches oder unbeabsichtigtes Herausziehen während der Fahrt zu verhindern, wird der Verriegelungshaken 22 in einer zweiten Position entsprechend der Darstellung der Fig. 2 arretiert. Dabei wird die Arretierungseinrichtung 2 nach dem Einbringen des Gurthakens 21 und der Ineingriffnahme mit dem Verriegelungshaken 22 in die Sperreinrichtung 3, die im Wesentlichen in Form einer Hülse (Gehäuse) ausgebildet ist, nach unten gezogen und in die zweite Position gebracht. Die Federkraft des Positionierelements 222 am Verriegelungshaken 22 ist dabei so stark zu bemessen, dass der Gurthaken 21 beim Bewegen der Arretierungseinrichtung 2 in das Sperrelements 3 aufgrund der am Gurt anliegenden Gegenkraft aus der Arretierungseinrichtung 2 nicht herausrutscht, gleichzeitig aber dennoch ein möglichst einfaches Herausziehen des Gurthakens 21 durch den Fahrgast beim Ausgurten ermöglicht wird, sobald sich die Arretierungseinrichtung 2 wieder in der ersten Position außerhalb der Sperreinrichtung 3 befindet. Hierbei übt die Steigung der Kontaktlinie bzw. -fläche, bzw. der Verbindung des Gurthakens 21 und des Verriegelungshakens 22 ebenfalls Einfluss auf die erforderliche minimale Herausziehkraft zum Lösen des Gurthakens 21 vom Verriegelungshaken 22 hat.

In der zweiten Position unterdrückt das Sperrelement 3 eine Bewegung des zweiten Anschlusselements 22 in Form des Verriegelungshakens 22 wenigstens so weit, dass dieser nicht außer Eingriff mit dem Gurthaken 21 gelangen kann. Insbesondere die Möglichkeit des Beiseiteschiebens des Verriegelungshakens 22 relativ zum Gurthaken 21 wird blockiert. Infolgedessen ist auch der Gurthaken 21 verriegelt und gesichert.

Aus den Figuren 1 und 2 wird ersichtlich, dass die Arretierungseinrichtung 2 in Form eines Gurtschlosses beim Einstecken infolge des Formschlusses zwischen Gurthaken 21 und Verriegelungshaken 22 und der Gegenkraft des Positionierelement 222 zwar einschnappt, die Fixierung, bzw. Verriegelung jedoch erst in einem zweiten Schritt durch Sperren des Verriegelungshakens 22 mittels der Sperreinrichtung 3 erfolgt.

Ebenso verhält es sich beim Ausgurten, wonach zuerst das Entriegeln erfolgt und dann der Gurthaken 21 (mit Gurt) kontrolliert unter Aufbringen einer vorgegebenen minimalen Zugkraft aus dem Schloss herausgezogen wird. Damit erfolgt der Verriegelungsvorgang zeitlich getrennt vom Ein- und auch Ausklinken des Gurthakens, was beim Einstieg noch Korrekturen ermöglicht (z.B. wieder ausschnallen und nochmals in anderer Sitzposition neu einschnallen) und beim Aussteigen verhindert, dass beim Entriegeln aufgrund der Zugsspannung am Gurt der Gurt unkontrolliert aus dem Gurtschloss herausgeschleudert wird.

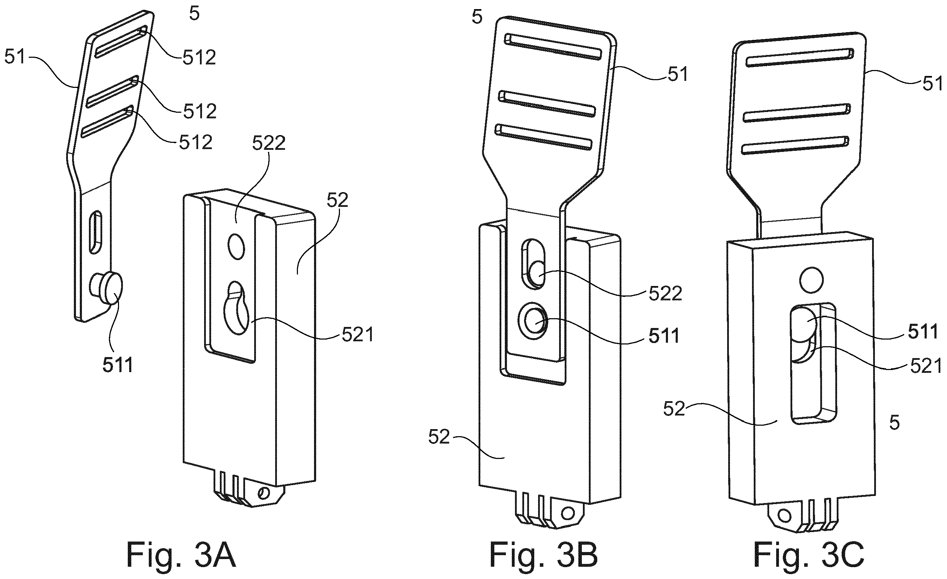

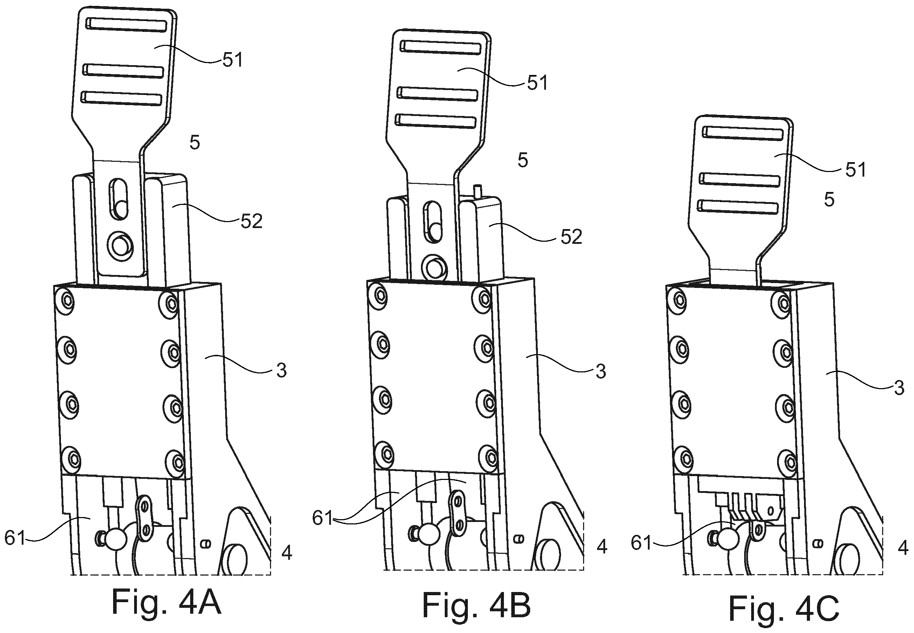

Aus den Figuren 3A-3C und 4A-4C wird eine erste nicht zur Erfindung gehörende Variante der Verschlussvorrichtung 4 erkennbar. Im Unterschied zur obigen Ausführungsform der Erfindung ist hierbei eine Bewegung zum Herstellen und Lösen der Verbindung zwischen erstem und zweitem Anschlusselement in der ersten Position erforderlich.

Fig. 3A zeigt die Bestandteile der Arretierungseinrichtung 5 mit einem ersten Anschlusselement 51 in Form einer Gurtlasche und einem zweiten Anschlusselement 52. Die Gurtlasche 51 weist einen Grundkörper 510 auf, der an seinem einen Ende mehrere Öffnungen 512 zur Aufnahme eines Gurts (nicht dargestellt) aufweist. An seinem anderen Ende befindet sich ein pilzförmiges Verbindungselement 511, dessen Oberseite einen größeren Durchmesser als der untere Bereich aufweist. Das Verbindungselement 511 wird an dem anderen Ende des Grundkörpers 510 der Gurtlasche 51 angebracht. Die Oberseite des Verbindungselements 511 und der Grundkörper 510 bilden dabei eine Nut. Das zweite Anschlusselement 52 weist eine entsprechende Aufnahme 521 für das Verbindungselement 511 auf. Die Aufnahme 521 ist zweigeteilt und weist eine Öffnung auf, deren Durchmesser der Oberseite des Verbindungselements 511 entspricht, bzw. größer als diese ist, und eine sich daran anschließende kleinere Öffnung entsprechend dem unteren Bereich des Verbindungselements 511. Die Aufnahme 521 weist eine Tiefe auf, die gleich oder kleiner der Breite der gebildeten Nut, bzw., dem unteren Bereich des Verbindungselements 511 ist. Daneben weist das zweite Anschlusselement 52 ein Führungselement 522, zur Führung der Bewegung der Gurtlasche 521 beim Arretieren der Gurtlasche 521 am zweiten Anschlusselement 52 auf.

Beim Verschlussvorgang wird zunächst das Verbindungselement 511 der Gurtlasche 51 in den größeren Bereich der Aufnahme 521 des zweiten Anschlusselements 52 entlang einer Einschubrichtung E eingebracht, bzw. eingehängt (vgl. Figuren 3B und 3C). Infolge einer anschließenden Bewegung wird das Verbindungselement 511 in die kleinere Öffnung des zweiten Anschlusselements 52 verschoben und eine Nutverbindung zwischen der zwischen dem Verbindungselement 511 und Grundkörper 510 gebildeten Nut und der Tiefe der Aufnahme 521 hergestellt.

Fig. 3C zeigt eine Rückansicht entsprechend der Fig. 3B. Erkennbar ist, dass der obere Bereich des Verbindungselements 511 über der kleineren Öffnung des Aufnahmeelements 521 liegt und somit eine Verbindung zwischen Gurtlasche 51 und zweiten Anschlusselement 52 herstellt. Die zwischen dem oberen Bereich des Verbindungselements 511 und dem Grundkörper 510 der Gurtlasche 51 gebildete Nut verhakt sich bei der Bewegung des Verbindungselements 511 vom Bereich des größeren Öffnungsbereichs in den kleineren Öffnungsbereichs mit dem Rand der kleineren Öffnung. Nach dem Einhängen ist die Verbindung zwischen der Gurtlasche 51 und dem zweiten Anschlusselement 52 durch eine vom Benutzer auszuführende Aushängebewegung, durch eine Bewegung des Verbindungselements 511 zur größeren Öffnung des Aufnahmeelements 521 hin, lösbar.

Aus den Figuren 4 A-4C wird die Herstellung der Arretierung der zweiten Position ersichtlich. Zusätzlich ist die Sperreinrichtung 3 erkennbar, die in Form eines Gehäuses ausgebildet ist, das die Arretierungseinrichtung 5 umschließen kann, wenn die Arretierungseinrichtung 5 ausreichend weit in das Gehäuse eingeführt wurde (zweite Position).

Ausgehend von der ersten Position gem. Fig. 3 C wird die Arretierungseinrichtung 5 mittels geeigneter Bewegungsmittel, z.B. einer oder mehrerer Gasdruckfeder(n) 61 in die Sperreinrichtung 3 gezogen, vgl., Figuren 4A und 4B, bis sie ausreichend weit in die Arretierungseinrichtung 5 eingebracht ist (vgl. Fig. 4C). Die Verbindung zwischen der Gurtlasche 51 und zweitem Anschlusselement 52 ist infolge der Unbewegbarkeit des Verbindungselements 511 zum Aufnahmeelements 521 entlang der Einschubrichtung E arretiert und ist auch nicht durch eine Bewegung der beiden Anschlusselemente zueinander trennbar.

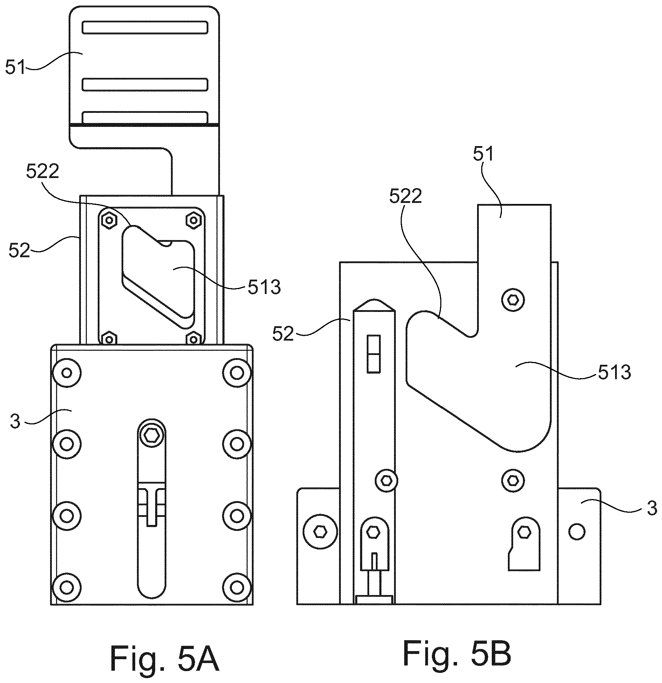

Die Figuren 5A und 5B zeigen eine weitere nicht zur Erfindung gehörende Variante, die eine Variante der ersten Variante ist, in der jedoch die Gurtlasche 51 mit einem Haken versehen ist und seitlich in das Aufnahmeelement 52 eingehängt wird. Das Verbindungselement 513 der Gurtlasche 51 weist somit einen Haken auf, der in eine entsprechende Aufnahme 522 des Anschlusselements 52 eingehängt wird. Die Verbindung kann in der ersten Position durch Aushängen gelöst werden. Fig. 5B zeigt die vorgenannte Anordnung im Detail.

Die zweite Position entspricht dem in den Figuren 4A und 4 B gezeigten Prinzip, wobei ein seitliches Aushaken des Hakens der Gurtlasche 51 von dem des Aufnahmeelements 52 durch die wenigstens teilweise Aufnahme der Arretierungseinrichtung 5 in der Sperreinrichtung 3 verhindert bzw. blockiert wird.

## Patentansprüche

1. Verschlussvorrichtung (1; 4) zum Verschließen eines Rückhaltesystems, umfassend eine Arretierungseinrichtung (2; 5) mit einem ersten Anschlusselement (21; 51) und einem zweiten Anschlusselement (22; 52), und eine Sperreinrichtung (3), wobei das erste Anschlusselement (21; 51) und das zweite Anschlusselement (22; 52) entlang einer Bewegungsebene durch eine Einsteckbewegung miteinander verbindbar und durch eine entgegengesetzte Herausziehbewegung lösbar sind, und wobei die Arretierungseinrichtung (2; 5) und die Sperreinrichtung (3) derart zusammenwirken, dass die Arretierungseinrichtung (2; 5) in wenigstens einer ersten Position relativ zur Sperreinrichtung (3) und/oder dem Zustand der Sperreinrichtung (3) eine gegen eine, gegen die Herausziehbewegung wirkende, vorgegebene Gegenkraft und durch eine Herausziehbewegung des ersten Anschlusselements (21; 51) relativ zum zweiten Anschlusselement (22; 52) lösbare Verbindung zwischen dem ersten Anschlusselement (21; 51) und dem zweiten Anschlusselement (22; 52) herstellt, und in wenigstens einer zweiten Position relativ zur Sperreinrichtung (3) und/oder dem Zustand der Sperreinrichtung (3) eine unlösbare Verbindung zwischen dem ersten Anschlusselement (21; 51) und dem zweiten Anschlusselement (22; 52) herstellt.

2. Verschlussvorrichtung (1; 4) zum Verschließen eines Rückhaltesystems nach Anspruch 1, wobei die unlösbare Verbindung in der zweiten Position durch eine Bewegung der Sperreinrichtung (3) relativ zum zur Arretierungseinrichtung (2; 5) hergestellt wird.

3. Verschlussvorrichtung (1; 4) zum Verschließen eines Rückhaltesystems nach Anspruch 1, wobei die unlösbare Verbindung in der zweiten Position durch elektrische und/ oder magnetische und/ oder mechanische Überführung der Sperreinrichtung (3) von der ersten zur zweiten Position hergestellt wird.

4. Verschlussvorrichtung (1; 4) zum Verschließen eines Rückhaltesystems nach einem der vorangegangenen Ansprüche, wobei die Gegenkraft zum Lösen des ersten Anschlusselements (21; 51) vom zweiten Anschlusselement (22; 52) in der ersten Position einstellbar ist.

5. Verschlussvorrichtung (1) zum Verschließen eines Rückhaltesystems nach einem der vorangegangenen Ansprüche, wobei die Arretierungseinrichtung (2) ein Positionierelement (222) umfasst, das am zweiten Anschlusselement (22) angeordnet ist und geeignet ist, das zweite Anschlusselement (22) in einer vorgegebenen Position zu halten.

6. Verschlussvorrichtung (1) zum Verschließen eines Rückhaltesystems nach Anspruch 5, wobei das Positionierelement (222) eine Feder ist und/oder aus einem elastischen Material besteht und/ oder die Positionierung des zweiten Anschlusselements (22; 52) insbesondere elektrisch und/oder magnetisch und/oder mechanisch erfolgt.

7. Verschlussvorrichtung (1) zum Verschließen eines Rückhaltesystems nach einem der vorangegangenen Ansprüche, wobei die Gegenkraft zum Lösen des ersten Anschlusselements (21) vom zweiten Anschlusselement (22) in der ersten Position durch ein Positionierelement (222) aufgebracht, bzw. bestimmt, wird.

8. Verschlussvorrichtung (1; 4) zum Verschließen eines Rückhaltesystems nach einem der vorangegangenen Ansprüche, wobei die Sperreinrichtung (3) eine hülsenförmige Form, insbesondere eine Gehäuseform aufweist, die die Arretierungseinrichtung (2; 5) wenigstens teilweise umschließt.

9. Verschlussvorrichtung (1; 4) zum Verschließen eines Rückhaltesystems nach einem der vorangegangenen Ansprüche, wobei die Arretierungseinrichtung (2; 5) einen Sensor aufweist, der geeignet ist, den Zustand der Arretierungseinrichtung (2; 5) zu überwachen.

10. Verfahren zum Verschließen eines Rückhaltesystems bei einer Vorrichtung (1; 4) nach den vorgenannten Ansprüchen 1 bis 9:
1. Verbinden eines ersten Anschlusselements (21; 51) mit einem zweiten Anschlusselement (22; 52)
2. Arretierung und Sicherung des zweiten Aufnahmeelements (22; 52) durch die Sperreinrichtung (3),
wobei die Schritte 1. und 2. zeitlich zueinander versetzt ausgeführt werden.

11. Verfahren zum Verschließen eines Rückhaltesystems nach Anspruch 10, wobei die Verbindung des Verfahrensschritts 1 durch Verhaken, Verhängen, Verrasten oder Ineingriffnahme erfolgt.

12. Verfahren zum Verschließen eines Rückhaltesystems nach Anspruch 10, wobei die hergestellte Verbindung zwischen dem ersten Anschlusselement (21; 51) und dem zweiten Anschlusselement (22; 52) des 1. Verfahrensschritts durch Aufbringen einer vorgegebenen minimalen Kraft lösbar ist.

13. Verfahren zum Verschließen eines Rückhaltesystems nach Anspruch 10, wobei die hergestellte Verbindung zwischen dem ersten Anschlusselement (21; 51) und dem zweiten Anschlusselement (22; 52) des 2. Verfahrensschritts durch eine Bewegung der Sperreinrichtung (3) und/ oder den Zustand der Sperreinrichtung (3) relativ zur Arretierungseinrichtung (2; 5) unlösbar fixiert ist.

14. Verfahren zum Lösen eines nach den Ansprüchen 10 bis 13 verschlossenen Rückhaltesystems bei einer Vorrichtung nach den vorgenannten Ansprüchen 1 bis 9:
1. Entsicherung eines zweiten Anschlusselements (22; 52) aus einer Sperreinrichtung (3),
2. Lösen einer Verbindung eines ersten Anschlusselements (21; 51) mit dem zweiten Anschlusselement (22; 52) durch Aufbringen wenigstens einer vorgegeben minimalen Kraft und/oder durch Bewegung des ersten Anschlusselements (21; 51) und/oder des zweiten Anschlusselements (22; 52) und/oder der beiden Anschlusselemente relativ zueinander,
wobei die Schritte 1. und 2. zeitlich zueinander versetzt ausgeführt werden.

15. Verfahren zum Lösen eines Rückhaltesystems nach Anspruch 14, wobei das Lösen der Verbindung des Verfahrensschritts 1 durch Aushaken, Aushängen, Entrasten, Trennung einer Ineingriffnahme erfolgt.

16. Sicherheitssystem zum Einsatz in einem Fahrzeug, insbesondere in einem Vergnügungsfahrzeug, umfassend:
einen Sitz, ein Rückhaltesystem mit wenigstens einer Rückhaltevorrichtung und eine Verschlussvorrichtung nach den vorgenannten Ansprüchen 1 bis 9.

17. Sicherheitssystem nach Anspruch 16, wobei die Rückhaltevorrichtung ein Gurt, eine Ratsche, eine Festhaltekette oder ein Festhalteseil ist.

## Claims

1. A closure device (1; 4) for closing a restraint system, comprising a locking device (2; 5) having a first connecting member (21; 51) and a second connecting member (22; 52), and a blocking device (3),
wherein
the first connecting member (21; 51) and the second connecting member (22; 51) can be connected to each other along a plane of movement by an insertion movement and can be released by an opposite withdrawal movement, and wherein the locking device (2; 5) and the blocking device (3) interact in such a way that, in at least a first position of the locking device (2; 5) relative to the blocking device (3) and/or the state of the blocking device (3), the locking device (2; 5) provides a releasable coupling between the first connecting member (21; 51) and the second connecting member (22; 52), the coupling being released by applying a predetermined opposing force acting against the pull-out movement,
and, in at least a second position relative to the blocking device (3) and/or the state of the blocking device (3), the locking device (2; 5) provides a non-releasable coupling between the first connecting member (21; 51) and the second connecting member (22; 52).

2. The closure device (1; 4) for closing a restraint system in accordance with claim 1, wherein the non-releasable coupling in the second position is provided by a movement of the blocking device (3) relative to the locking device (2; 5).

3. The closure device (1; 4) for closing a restraint system in accordance with claim 1, wherein the non-releasable coupling in the second position is provided by electrical and/or magnetic and/or mechanical transfer of the blocking device (3) from the first position to the second position.

4. The closure device (1; 4) for closing a restraint system in accordance with any of the previous claims, wherein the opposing force for releasing the first connecting member (21; 51) from the second connecting member (22; 52) is adjustable.

5. The closure device (1) for closing a restraint system in accordance with any of the previous claims, wherein the locking device (2) comprises a positioning member (222), which is disposed at the second connecting member (22) and is capable of holding the second connecting member (22) in a predetermined position.

6. The closure device (1) for closing a restraint system in accordance with claim 5, wherein the positioning member (222) is a spring and/or consists of an elastic material and/or positioning the second connecting member (22; 52) is provided electrically, magnetically or mechanically.

7. The closure device (1) for closing a restraint system in accordance with any of the previous claims, wherein the opposing force for releasing the first connecting member (21) from the second connecting member (22) in the first position is applied and determined, respectively, by the positioning member (222).

8. The closure device (1; 4) for closing a restraint system in accordance with any of the previous claims, wherein the blocking device (3) has a sleeve shape, especially a housing shape, which at least partially encloses the locking device (2; 5).

9. The closure device (1; 4) for closing a restraint system in accordance with any of the previous claims, wherein the locking device (2; 5) has a sensor which is suitable for monitoring the state of the locking device (2; 5).

10. A method for closing a restraint system according to any one of claims 1 to 9, comprising the following steps:
1. Coupling of a first connecting member (21; 51) to a second connecting member (22; 52)
2. Locking and securing of the second receiving member (22; 52) by the blocking device (3),
wherein step 1 and step 2 are executed are offset in time..

11. The method for closing a restraint system in accordance with claim 10, wherein the coupling in method step 1 is effected by hooking, catching, latching or engaging.

12. The method for closing a restraint system in accordance with claim 10, wherein the coupling provided between the first connecting member (21; 51) and the second connecting member (22; 52) in the first method step can be released by applying a predetermined minimum force.

13. The method for closing a restraint system in accordance with claim 10, wherein the coupling created between the first connecting member (21; 51) and the second connecting member (22; 52) in the second method step is unreleasably fixed by a movement of the blocking device (3) relative to the locking device (2; 5).

14. A method for releasing a restraint system which has been closed according to any one of claims 10 to 13, in a restraint system according to any one of claims 1 to 9, comprising the following steps:
1. Unlocking of a second connecting member (22; 52) from a blocking device (3),
2. Releasing of a coupling of a first connecting member (21; 51) to the second connecting member (22; 52) by application of at least a predetermined minimum force and/or by movement of the first connecting member (21; 51) and/or the second connecting member (22; 52) and/or the two connecting members relative to each other,
wherein step 1 and step 2 are executed are offset in time..

15. The method for releasing a restraint system in accordance with claim 14, wherein the releasing of the coupling in method step 1 is effected by unhooking, uncatching, unlatching or separation of an engagement.

16. A safety system for use in a vehicle, especially in an amusement vehicle, comprising:
a seat, a restraint system comprising at least one restraint device, and a closure device in accordance with any one of the aforementioned claims 1 to 9.

17. The safety system in accordance with claim 16, wherein the restraint device is a belt, a ratchet, a retaining chain or a retaining rope.

## Revendications

1. Dispositif de fermeture (1 ; 4) pour la fermeture d'un système de retenue, comprenant un dispositif d'arrêt (2 ; 5) doté d'un premier élément de raccordement (21 ; 51) et d'un second élément de raccordement (22 ; 52), et un système de barrage (3),
le premier élément de raccordement (21 ; 51) et le second élément de raccordement (22 ; 52) étant connectables l'un à l'autre le long d'un plan de mouvement par un mouvement d'emboîtement et étant dissociables par un mouvement d'extraction opposé, et le dispositif d'arrêt (2 ; 5) et le système de barrage (3) interagissant de manière à ce que le dispositif d'arrêt (2 ; 5) établisse, dans au moins une première position, par rapport au système de barrage (3) et/ou à l'état du système de barrage (3), une contre-force prédéfinie agissant à l'encontre du mouvement d'extraction et, par un mouvement d'extraction du premier élément de raccordement (21 ; 51) par rapport au second élément de raccordement (22 ; 52), une liaison dissociable entre le premier élément de raccordement (21 ; 51) et le second élément de raccordement (22 ; 52) et établisse, dans au moins une seconde position, par rapport au système de barrage (3) et/ou à l'état du système de barrage (3), une liaison indissociable entre le premier élément de raccordement (21 ; 51) et le second élément de raccordement (22 ; 52).

2. Dispositif de fermeture (1 ; 4) pour la fermeture d'un système de retenue selon la revendication 1, dans lequel la liaison indissociable est établie dans la seconde position par un mouvement du système de barrage (3) par rapport au dispositif d'arrêt (2 ; 5).

3. Dispositif de fermeture (1 ; 4) pour la fermeture d'un système de retenue selon la revendication 1, dans lequel la liaison indissociable est établie dans la seconde position par une transition électrique et/ou magnétique et/ou mécanique du système de barrage (3) de la première vers la seconde position.

4. Dispositif de fermeture (1 ; 4) pour la fermeture d'un système de retenue selon une des revendications précédentes, dans lequel la contre-force de dissociation du premier élément de raccordement (21 ; 51) et du second élément de raccordement (22 ; 52) est réglable dans la première position.

5. Dispositif de fermeture (1) pour la fermeture d'un système de retenue selon une des revendications précédentes, dans lequel le dispositif d'arrêt (2) comprend un élément de positionnement (222) qui est disposé au niveau du second élément de raccordement (22) et est apte à maintenir le second élément de raccordement (22) dans une position prédéfinie.

6. Dispositif de fermeture (1) pour la fermeture d'un système de retenue selon la revendication 5, dans lequel l'élément de positionnement (222) est un ressort et/ou est composé d'un matériau élastique et/ou le positionnement du second élément de raccordement (22 ; 52) se fait en particulier par système électrique et/ou magnétique et/ou mécanique.

7. Dispositif de fermeture (1) pour la fermeture d'un système de retenue selon une des revendications précédentes, dans lequel la contre-force de dissociation du premier élément de raccordement (21) et du second élément de raccordement (22) est appliquée ou définie dans la première position par un élément de positionnement (222).

8. Dispositif de fermeture (1 ; 4) pour la fermeture d'un système de retenue selon une des revendications précédentes, dans lequel le système de barrage (3) présente une forme de manchon, en particulier une forme d'enceinte, qui entoure au moins partiellement le dispositif d'arrêt (2 ; 5).

9. Dispositif de fermeture (1 ; 4) pour la fermeture d'un système de retenue selon une des revendications précédentes, dans lequel le dispositif d'arrêt (2 ; 5) présente un capteur qui est apte à surveiller l'état du dispositif d'arrêt (2 ; 5).

10. Procédé de fermeture d'un système de retenue dans un dispositif (1 ; 4) selon les revendications précédentes 1 à 9 :
1. connexion d'un premier élément de raccordement (21 ; 51) à un second élément de raccordement (22 ; 52),
2. arrêt et blocage du deuxième élément récepteur (22 ; 52) par le système de barrage (3),
les étapes 1 à 2 étant réalisées avec un décalage chronologique l'une par rapport à l'autre.

11. Procédé de fermeture d'un système de retenue selon la revendication 10, dans lequel la connexion de l'étape opératoire 1) se fait par crochetage, accrochage, enclenchement ou engrènement.

12. Procédé de fermeture d'un système de retenue selon la revendication 10, dans lequel la liaison établie entre le premier élément de raccordement (21 ; 51) et le second élément de raccordement (22 ; 52) de la 1ère étape opératoire est dissociable par application d'une force minimale prédéfinie.

13. Procédé de fermeture d'un système de retenue selon la revendication 10, dans lequel la liaison établie entre le premier élément de raccordement (21 ; 51) et le second élément de raccordement (22 ; 52) de la 2ème étape opératoire est fixée de manière indissociable par un mouvement du système de barrage (3) et/ou l'état du système de barrage (3) par rapport au dispositif d'arrêt (2 ; 5).

14. Procédé de dissociation d'un système de retenue fermé dans un dispositif selon les revendications précédentes 1 à 9 :
1. déblocage d'un second élément de raccordement (22 ; 52) d'un système de barrage (3),
2. dissociation d'une liaison entre un premier élément de raccordement (21 ; 51) et un second élément de raccordement (22 ; 52) par application d'au moins une force minimale prédéfinie et/ou par mouvement du premier élément de raccordement (21 ; 51) et/ou du second élément de raccordement (22 ; 52) et/ou des deux éléments de raccordement l'un par rapport à l'autre,
les étapes 1 et 2 étant réalisées avec un décalage chronologique l'une par rapport à l'autre.

15. Procédé de dissociation d'un système de retenue selon la revendication 14, dans lequel la dissociation de la liaison de l'étape opératoire se fait par décrochetage, décrochage, désenclenchement, séparation d'un engrènement.

16. Système de sécurité destiné à être utilisé dans un véhicule, en particulier dans un véhicule de divertissement, comprenant :
un siège, un système de retenue comportant au moins un dispositif de retenue et un dispositif de fermeture selon les revendications précédentes 1 à 9.

17. Système de sécurité selon la revendication 16, dans lequel le dispositif de retenue est une ceinture, un cliquet, une chaîne de maintien ou un câble de maintien.
